# EUROPEAN PATENT APPLICATION

(11) **EP 4 752 440 A1**
(43) Date of publication of application: **03.06.2026**
(21) Application number: 24949895.7
(22) Date of filing: 04.10.2024
(51) Int. Cl.: F24C 7/08, F24C 7/04, G06Q 50/10, H04L 67/125, H04N 23/57, H04N 7/18, G06V 20/68, G06V 10/14, G06V 10/80

(54) **COOKING APPLIANCE, SERVER, AND METHOD FOR CONTROLLING COOKING PROCESS ACCORDING TO COOKING STATE**

(71) Applicant: LG ELECTRONICS, INC., Seoul 07336 (KR)
(72) Inventor: KWON, Young Tag, Seoul 08592 (KR); LEE, Joong Keun, Seoul 08592 (KR); JUNG, Sanghun, Seoul 08592 (KR); KIM, Dong Gun, Seoul 08592 (KR)
(74) Representative: Schott, Jakob Valentin
(86) International application number: PCT/KR2024/015055
(87) International publication number: WO 2026/075291

(57) **Abstract**

The present invention relates to a technology related to a cooking apparatus, server, and method for controlling a cooking process according to a cooking state, and a method of controlling a cooking process according to a cooking state according to one embodiment of the present invention includes capturing, by a camera of a cooking apparatus, an image of a food material placed in a main body of the cooking apparatus, performing, by a cooking guide module disposed in any one of the cooking apparatus or a server configured to communicate with the cooking apparatus, a food material recognition process on the image of the food material captured by the camera, generating, by the cooking guide module, first schedule information for checking the cooking state of the food material, and recognizing, by the cooking guide module, the cooking state according to the first schedule information during a heating process of the food material to generate first guide information and providing the first guide information to the cooking apparatus.

## Description

### [Technical Field]

The present invention relates to a cooking apparatus, server, and method for controlling a cooking process based on a cooking state.

### [Description of the Related Art]

An oven provides a function of cooking various foods, and users can cook various food materials using the oven. However, cooking methods and temperatures vary depending on the food material, and it is difficult for users to fully understand all of these.

For example, the temperature and time required for heating in an oven can vary depending on the type of food material, such as meat, fish, vegetables, or the like, and the type of dish. Accordingly, oven users can have desired specific cooking states depending on the type of food material. For example, for baguettes or meat, users can want to control the oven to a specific cooking state (e.g., light, medium, strong).

That is, there is a need for a method of determining a cooking state and controlling a cooking process so that oven users can receive a cooking guide suitable for a food material and control an oven accordingly."

### [Disclosure]

### [Technical Problem]

The present specification is to solve the above problems and directed to providing an apparatus and method for allowing a cooking apparatus or a server to check a cooking state by analyzing images or videos without requiring a user to check a cooking state of a food material.

In addition, the present specification is directed to providing an apparatus and method for setting value a period for checking and comparing images of a cooking state according to a food material and cooking situations, thereby increasing the accuracy of checking a cooking state.

In addition, the present specification is directed to providing an apparatus and method for changing a period for checking and cooking guidance information depending on a cooking state and providing the changed period for checking and cooking guidance information.

Objects of the present invention are not limited to the above-described object, and other objects and advantages of the present invention which are not mentioned can be understood by the following description and more clearly understood by embodiments of the present disclosure. In addition, it will be able to be easily seen that the objects and advantages of the present invention may be achieved by devices and combinations thereof that are described in the claims.

### [Technical Solution]

According to one embodiment of the present invention, a cooking apparatus cooks a food material and includes a main body configured to heat the food material, a camera configured to capture the food material placed in the main body, a cooking guide module configured to perform a food material recognition process on an image of the food material captured by the camera, generate first schedule information for checking a cooking state of the food material, and recognize the cooking state according to the first schedule information during a heating process of the food material to provide first guide information, and an apparatus controller configured to control the main body, the camera, and the cooking guide module.

According to another embodiment of the present invention, a cooking apparatus cooks a food material and includes a main body configured to heat the food material, a camera configured to capture the food material placed in the main body, an apparatus communicator configured to communicate with a server, and an apparatus controller configured to receive first schedule information and first guide information from the server and control the apparatus communicator and the camera to transmit an image captured by the camera to the server according to the first schedule information.

According to one embodiment of the present invention, there is provided a server including a server communicator configured to communicate with a cooking apparatus that cooks a food material, a cooking guide module configured to perform a food material recognition process on an image of the food material transmitted by the cooking apparatus, generate first schedule information for checking a cooking state of the food material, and recognize the cooking state according to the first schedule information during a heating process of the food material to provide first guide information, and a server controller configured to control the server communicator and the cooking guide module to transmit the first schedule information and the first guide information to the cooking apparatus.

According to one embodiment of the present invention, there is provided a method of controlling a cooking process according to a cooking state, including capturing, by a camera of a cooking apparatus, an image of a food material placed in a main body of the cooking apparatus, performing, by a cooking guide module disposed in any one of the cooking apparatus or a server configured to communicate with the cooking apparatus, a food material recognition process on the image of the food material captured by the camera, generating, by the cooking guide module, first schedule information for checking the cooking state of the food material, and recognizing, by the cooking guide module, the cooking state according to the first schedule information during a heating process of the food material to generate first guide information and providing the first guide information to the cooking apparatus.

### [Advantageous Effects]

According to the present invention, the food material can be cooked to the cooking state desired by the user by providing the apparatus and method for allowing the cooking apparatus or the server to check the cooking state by analyzing images or videos without requiring the user to check the cooking state of the food material.

In addition, according to the present invention, it is possible to precisely monitor the cooking situation by providing an apparatus and method for setting value the period for checking and comparing images of the cooking state according to the food materials and cooking situations, thereby increasing the accuracy of checking the cooking state.

In addition, according to the present invention, it is possible to precisely the cooking method, the monitoring method, and the like depending on the cooking situation by providing the apparatus and method for changing the period for checking and cooking guidance information depending on the cooking state and providing the changed period for checking and cooking guidance information.

Effects of the present invention are not limited to the above effects, and various effects of the present invention can be easily derived from the configuration of the present invention.

### [BRIEF DESCRIPTION OF THE DRAWINGS]

FIG. 1 is a view illustrating a configuration of a cooking apparatus according to one embodiment of the present invention.
FIG. 2 is a view illustrating a configuration of a cooking apparatus and a server according to one embodiment of the present invention.
FIG. 3 is a view illustrating a process in which a cooking guide module according to one embodiment of the present invention performs a food material recognition process.
FIG. 4 is a view illustrating a process of checking a cooking state during cooking according to one embodiment of the present invention.
FIG. 5 is a view illustrating a detailed process of the food material recognition process according to one embodiment of the present invention.
FIG. 6 is a view illustrating a configuration of schedule information according to one embodiment of the present invention.
FIG. 7 is a view illustrating an example in which the schedule information is set according to a browning level according to one embodiment of the present invention.
FIG. 8 is a view illustrating schedule information set for each food material according to one embodiment of the present invention.
FIG. 9 is a view illustrating schedule information set according to an initial browning level according to one embodiment of the present invention.
FIG. 10 is a view illustrating a process in which the cooking apparatus decodes the schedule information provided by a cooking guide module according to one embodiment of the present invention.
FIG. 11 is a view illustrating a process of checking a cooking state during cooking of the cooking apparatus according to one embodiment of the present invention.
FIG. 12 is a view illustrating a process of generating color information of a food material and checking a cooking state according to one embodiment of the present invention.
FIG. 13 is a view illustrating a process when a cooking guide module according to one embodiment of the present invention is disposed in a server.
FIG. 14 is a view illustrating a process of adding videos to a request list according to one embodiment of the present invention.

### [DETAILED DESCRIPTION OF THE INVENTION]

Hereinafter, embodiments of the present invention will be described in detail with reference to the accompanying drawings so that those skilled in the art to which the present invention pertains can easily carry out the present invention. The present invention may be implemented in various different forms and is not limited to the embodiments described herein.

To clearly describe the present invention, parts not related to the description have been omitted, and the same or similar components are denoted by the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present disclosure, when it is determined that a detailed description of a related known configuration or function may obscure the gist of the present disclosure, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

In the present specification, one embodiment of a cooking apparatus includes an oven, which is a home appliance that heats and cooks various food materials. In an embodiment, the oven includes various home appliances, such as a lightwave oven, a microwave oven, an air fryer, etc.

In the present specification, the cooking apparatus includes a camera for capturing an image of a food material placed therein. In addition, in the present specification, the cooking apparatus may optionally include a display for outputting a video. When the cooking apparatus does not include the display, the display of a terminal device linked to the cooking apparatus may output a video.

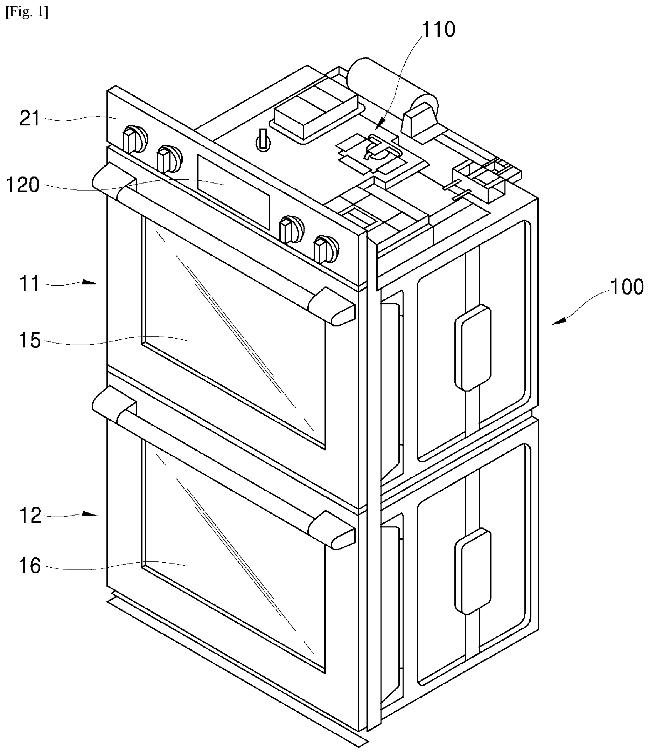

FIG. 1 is a view illustrating a configuration of a cooking apparatus according to one embodiment of the present invention. FIG. 1 corresponds to one embodiment, and cooking apparatus according to other embodiments of the present invention may have shapes or components different from those illustrated in FIG. 1. A cooking apparatus 100 is a home appliance that cooks a food material.

A main body, which heats the food material, includes a manipulation unit 21, doors 11 and 12, and cooking chambers 15 and 16 opened and closed by the doors 11 and 12.

A display module 120 is disposed on the manipulation unit 21 for manipulating the cooking apparatus 100. A user may check a cooking guide through the display module 120. The camera 110 for capturing an image of a food material placed in the main body may be disposed at an upper end of the cooking apparatus 100 to capture an image of an interior of the cooking chamber. Alternatively, the camera 110 may be positioned within the cooking apparatus 100 so as to be invisible from the outside.

The cooking chambers 15 and 16 may be opened and closed by the doors 11 and 12. A shelve or stand for arranging a food material may be disposed inside the cooking chambers 15 and 16, and lamps for heating may be disposed. The camera 110 may capture images of interiors of the cooking chambers 15 and 16.

The drawing distinguishes the manipulation unit 21 from the display module 120, but a configuration in which an interface for manipulation is displayed on the display module 120 in another embodiment is also included in the embodiment of the present invention. For example, the display module 120 may be configured as a touch screen, and the display module 120 may display a button or the like corresponding to the manipulation unit 21 on a screen.

The cooking apparatus of FIG. 1 may recognize a food material, that is, items to be cooked, placed in the cooking chamber 15 and 16. In addition, when a target cooking state to be achieved by heating the corresponding item is set automatically or manually, the cooking apparatus 100 may perform cooking and determine whether the target cooking state has been reached.

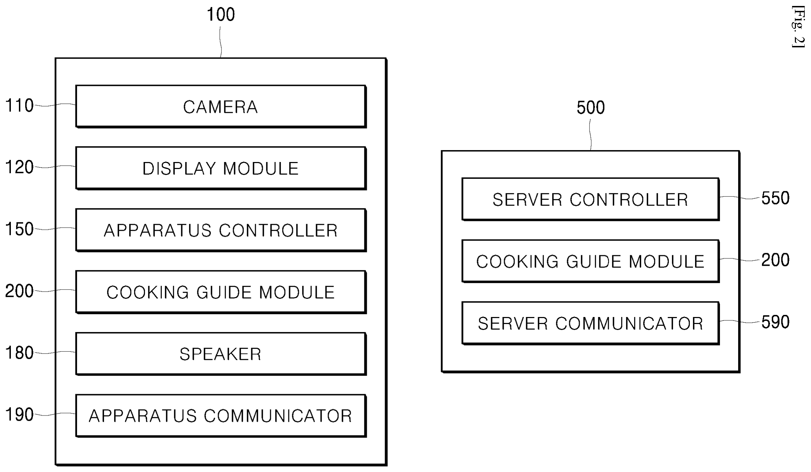

FIG. 2 is a view illustrating a configuration of a cooking apparatus and a server according to one embodiment of the present invention. In addition to the components included in the cooking apparatus 100 of FIG. 2, the cooking apparatus 100 may further include cooking components (heating devices, doors, etc.). A speaker 180 may output predetermined audio information. For example, guide information on cooking times, guide information indicating cooking times or heating temperatures appropriate for a food material, and the like may be displayed in the form of text, images, or the like on the display module 120 or output in the form of audio through the speaker 180.

An apparatus controller 150 of the cooking apparatus 100 controls the operation of the cooking apparatus 100.

The apparatus controller 150 may control the main body and the camera 110 of the cooking apparatus 100. In addition, when the cooking apparatus 100 includes a cooking guide module 200, the apparatus controller 150 may control the cooking guide module 200.

When the cooking apparatus 100 does not include the cooking guide module 200, the apparatus controller 150 receives schedule information and guide information from a server 500 and controls an apparatus communicator 190 and the camera 110 to transmit images captured by the camera 110 to the server 500 based on the received schedule information.

The cooking apparatus 100 and the server 500 may transmit and receive data in a wired or wireless communication manner. One or both of the cooking apparatus 100 and the server 500 may include the cooking guide module 200. For example, the cooking apparatus 100 may include the cooking guide module 200. Alternatively, the server 500 may include the cooking guide module 200.

The cooking guide module 200 performs a food material recognition process on the image of the food material captured by the camera 110 of the cooking apparatus 100 and generates first schedule information for checking the cooking state of the food material. In addition, the cooking guide module 200 recognizes the cooking state according to the first schedule information during a heating process of the food material and provides first guide information.

The cooking guide module 200 disposed in the server 500 may perform the above tasks on the image of the food material transmitted by the cooking apparatus 100. In this case, a server controller 550 of the server 500 may control the server communicator 190 and the cooking guide module 200 to transmit the first schedule information and the first guide information to the cooking apparatus 100.

The schedule information relates to information such as periods, times, and the like for checking the cooking state. The guide information is guidance information on a change, continuation, or the like in the operation of the cooking apparatus 100. The guide information may include information that controls the operation of the cooking apparatus 100.

The cooking guide module 200 may perform object detection on a food material (item to be cooked) placed in the cooking apparatus 100. As a result of performance, the cooking guide module 200 may identify whether the food material corresponds to bread or meat.

The cooking guide module 200 may identify the type, size, or the like of the food material and provide stepwise browning levels suitable for the corresponding food material. In addition, the cooking guide module 200 determines whether the current cooking status corresponds to a browning level set by the user during cooking. The cooking guide module 200 may generate schedule information for checking the cooking state.

When the current cooking status corresponds to the browning level set by the user, the cooking guide module 200 may provide guide information indicating that cooking may be completed. For example, it is assumed that a browning level set to target state information is light browning and schedule information is generated in relation to cooking for five minutes. As a result of checking the cooking state according to the schedule information, when the state of the food material reaches the light browning state after three minutes have elapsed, the module 200 may provide guide information, such as notifying the end of cooking, notifying that the cooking needs to be terminated, etc.

For example, the cooking apparatus 100 may output voice guidance information, such as "The bread has reached the set browning level. Please check the bread in the oven."

Depending on whether the cooking guide module 200 is positioned in the cooking apparatus 100 or the server 500, a process of transmitting information generated by the cooking guide module 200 to the cooking apparatus 100 may be added.

According to the configuration of FIG. 2, the cooking apparatus 100 or the server 500 may determine the cooking state of the food material in real time throughout the entire cooking process based on the videos captured by the camera disposed within the cooking apparatus 100, for example, a cooking chamber of an oven. When the user reaches a specific cooking state (cooking state) set for the food material, the cooking apparatus 100 or the server 500 may provide a cooking guide or a pre-alarm function according to the cooking state being reached in various ways. During this process, the cooking apparatus 100 may output relevant information, or a user terminal (e.g., a smartphone, smartwatch, or the like) linked to the cooking apparatus 100 may output the corresponding information.

In addition, the cooking apparatus 100 or the server 500 acquires videos at regular intervals to determine the cooking state and performs a deep learning algorithm for classification and a color-based computer vision algorithm on the acquired videos. As a result of performing the algorithms, when the level of the cooking state is output in a certain pattern, a screen (e.g., a liquid crystal display (LCD)) of the cooking apparatus 100 or an app installed on a connected user terminal (e.g., a smartphone, smartwatch) issues a notification, allowing the user to check the cooking state.

The cooking guide module 200 included in the cooking apparatus 100 or the server 500 may perform a food material recognition process and a food material state checking process.

The food material recognition process may be performed based on the following process.

The camera captures an image of a food material placed in the cooking apparatus 100, and the cooking guide module 200 recognizes the food material based on the captured image. In addition, the cooking guide module 200 may provide one or more cooking states (target cooking states) appropriate for the food material as guide information based on the recognition result, and when two or more target cooking states are generated, one of them may be provided as a default setting value. In addition, when the user selects the default setting value, the cooking guide module 200 may set a period of checking the state of the food material based on the selected default setting value.

During the process of checking the food material, the camera captures an image of the food material being cooked and the cooking guide module 200 recognizes the cooking state of the food material based on the captured image. In addition, when the cooking state is the same as or similar to the target cooking state designated by the user, the cooking apparatus 100 may notify the user of such a cooking state. In addition, when the cooking state is similar to the target cooking state, the cooking guide module 200 may provide guidance information to the cooking apparatus 100 so that the cooking apparatus 100 stops cooking.

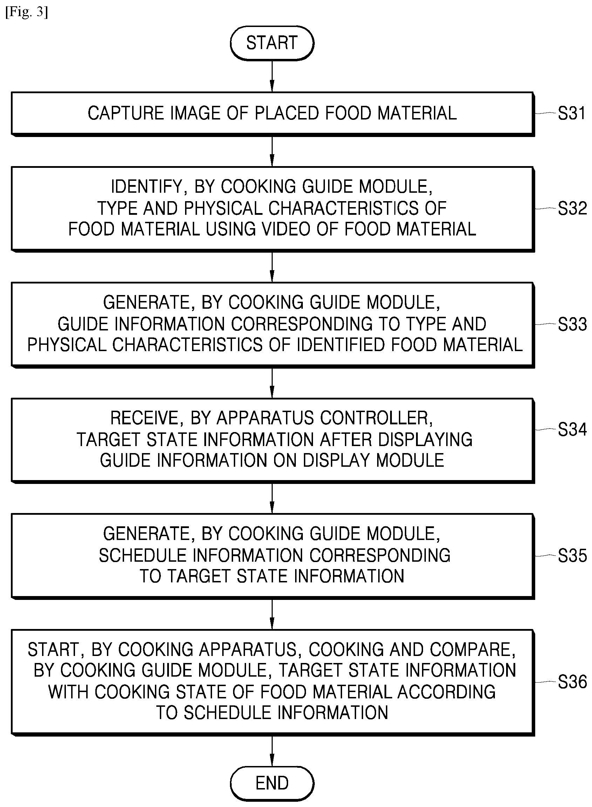

FIG. 3 is a view illustrating a process in which a cooking guide module according to one embodiment of the present invention performs a food material recognition process.

This is a process in which, when a user places the food material, that is, the cooking object, into a cooking chamber of an oven, which is one embodiment of the cooking apparatus 100, and closes the door, a camera recognizes a food material, and the cooking apparatus 100 may be set to start with the default setting value appropriate for the food material. The user may set a desired cooking state (browning) value and instruct the cooking apparatus 100 to start cooking.

The embodiment of FIG. 3 corresponds to both cases in which the cooking guide module 200 is disposed in the cooking apparatus 100 and in which the cooking guide module 200 is disposed in the server 500. However, when the cooking guide module 200 is disposed in the server 500, communication may be established between the cooking apparatus 100 and the server 500, enabling transmission and reception of videos and information. The communication between the cooking apparatus 100 and the server 500 is handled by the apparatus communicator 190 and a server communicator 590.

This will be described in more detail.

The camera 110 captures a video of the placed food material (S31). The cooking guide module 200 uses the video of the food material to identify the type and physical characteristics of the food material (S32). The types of food materials may include bread, rice, water, meat, fish, etc. To identify the type of food material, the cooking guide module 200 may perform color detection and classification on the video of the food material. This will be described below.

The physical characteristics include information such as the size, volume, weight, and the like of the food material. When a weight sensor is present in the cooking chamber, the physical characteristics may include weight information.

In addition, the physical characteristics include temperature information of the food material. For example, when a temperature sensor is present in the cooking chamber, surface temperature information of the food material may be generated. The cooking guide module 200 may generate physical characteristics using the above information, such as size, volume, weight, temperature, etc.

The cooking guide module 200 generates guide information corresponding to the type and physical characteristics of the identified food material (S33). The guide information may include a cooking state (e.g., light/medium/strong browning or the like) appropriate for the identified food material and a required heating temperature and time to achieve the corresponding cooking state.

For a baguette, the cooking guide module 200 may calculate a required temperature and time to bake at light, medium, or strong as shown in the following Table 1. The browning level may be set in various ways. The guide information may include one or more of the temperatures and times for each level in Table 1.

**[Table 1]**

| State | Temperature | Time |
|---|---|---|
| Light | 170 °C | 10 minutes |
| Medium | 175 °C | 15 minutes |
| Strong | 180 °C | 20 minutes |

The apparatus controller 150 displays guide information on the display module 120 and receives target state information, which is a desired cooking state selected by the user from the guide information (S34). When the display module 120 is a touch panel, the target state information may be selected from the guide information based on the user's touch input. Alternatively, a result of the user modifying some (e.g., temperature, time, or the like) of the guide information may be set as the target state information.

For example, when the user desires a "medium" state, the target state information includes a baked state set to "medium." When the user selects one of "light" and "medium," the target state information includes a baked state set to "light-medium."

The cooking guide module 200 generates schedule information corresponding to the target state information (S35). The cooking guide module 200 may repeatedly check the video of the current food material until the current food material reaches the target state information during cooking. The schedule information includes information on the time intervals, periods, or the like at which the cooking guide module 200 checks the cooking state of the food material.

In an embodiment, the schedule information may be a time table or a time schedule. The schedule information may consist of one or more periods, and each period may have a time interval set for checking the state of the food material. This will be described below.

After the target state information is set, the cooking apparatus 100 starts cooking, and the cooking guide module 200 compares the target state information with the cooking state of the food material according to the schedule information (S36). When the cooking guide module 200 is positioned on the server 500, the cooking apparatus 100 may transmit video information on the current cooking status of the food material to the server 500 according to the schedule information.

During the subsequent cooking process, the cooking guide module 200 may compare video data to determine whether the current cooking status corresponds to the target state information, change the previously generated guide information or schedule information accordingly, and provide the changed information to the cooking apparatus 100.

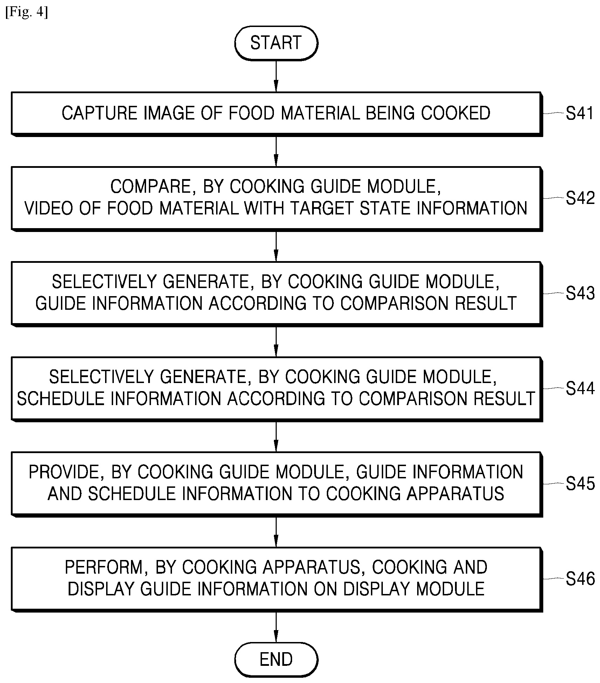

FIG. 4 is a view illustrating a process of checking a cooking state during cooking according to one embodiment of the present invention. The camera 110 captures a video of a food material being cooked (S41). The cooking guide module 200 compares the video of the food material with the target state information (S42). During the comparison process, the cooking guide module 200 may perform color detection and object recognition tasks used in the food recognition process of FIG. 3.

The cooking guide module 200 selectively generates guide information based on the comparison result (S43). For example, as a result of comparing the comparison between the current cooking status and the target state information, when cooking continues at the current cooking temperature and time and there is a possibility that the food material may reach a stronger or lighter browning level than the target state, the cooking guide module 200 may generate new guide information.

For example, it is assumed that, after the guide information is set to cook bread at 170 °C for 5 minutes, the cooking guide module 200 analyzes the video of the food material at 3 minutes and determines that the bread has reached the same browning level as the target state information. When heating continues for the remaining 2 minutes, the bread is likely to be overcooked beyond the target state set by the user, and thus the cooking guide module 200 may provide the cooking apparatus 100 with guide information indicating that the current cooking may be terminated.

In addition, the cooking guide module 200 selectively generates schedule information based on the comparison result (S44). For example, when the cooking state needs to be checked more frequently in a situation in which the schedule information is set to check the cooking state every 30 seconds, the cooking guide module 200 may be set to change the schedule information to check the cooking state every 15 seconds.

The changing of the guide information and the schedule information (S43, S44) may be performed selectively. That is, when the cooking process is performed according to the previously set guide information and schedule information, the cooking process may be performed without any changes, and the cooking state may be continuously checked.

In addition, the cooking guide module 200 provides the guide information and the schedule information to the cooking apparatus (S45). The cooking apparatus 100 performs cooking and displays the guide information on the display module 120 (S46).

The display of predetermined information on the display module 120 of FIGS. 3 and 4 includes an embodiment of displaying information on a user terminal linked to the cooking apparatus 100. In this case, the user may control the cooking apparatus 100 by controlling the user terminal.

According to the examples of FIGS. 3 and 4, the cooking guide module 200 may check the video captured by the camera of the cooking apparatus 100 and provide the guide information and the schedule information to exchange and process the information. The video captured by the camera 110 according to the schedule information for a set cooking time based on a food material, a menu, a cooking level (e.g., a heating level), an amount of the food material, a browning level, or the like are transmitted to the cooking guide module 200. In particular, when the cooking guide module 200 is positioned in the server 500, the cooking apparatus 100 and the server 500 may transmit and receive information based on the period of the schedule information according to network delay.

According to the examples of FIGS. 3 and 4, once cooking starts, the cooking apparatus 100, which may be, for example, an oven product, may communicate with the server 500 for recognizing a cooking state or use the cooking guide module 200 implemented in the cooking apparatus 100 to check a video acquisition period (schedule information) suitable for recognizing the state of the food material.

In addition, the oven product transmits the video of the cooking object in the cooking chamber of the oven to the server 500 or to the cooking guide module 200 implemented in the cooking apparatus 100 according to the video acquisition period (schedule information).

The cooking guide module 200 uses a recognizer trained using deep learning and computer vision algorithms to provide patterns of cooking state levels to the cooking apparatus 100.

When the patterns of the cooking state levels provided to the cooking apparatus 100 reaches the cooking state (target state information) set by the user, the cooking apparatus 100 may provide a sound and a pop-up, and an app on a connected user terminal (e.g., a smartphone) may also provide a cooking completion notification.

According to the embodiment of the present invention, during cooking using the cooking apparatus, for example, an oven, the user does not need to periodically check the cooking chamber of the oven through an oven door window or open a door to check the cooking state of the food material inside the oven to determine the browning level. That is, the cooking guide module 200 may compare the target cooking state set by the user with the video provided by the camera of the cooking chamber of the oven to determine the cooking state in real time and notify the user of an optimal cooking state, thereby ensuring flawless cooking.

In FIG. 3, operations S33 and S34 may also be performed after cooking. For example, when the user places the food material in the oven and selects "medium browning," this medium browning may correspond to the target state information to perform operations S31 to S36.

The examples of FIGS. 3 and 4 are summarized as follows.

A camera 110 of the cooking apparatus 100 captures a video of a food material placed in a main body of the cooking apparatus 100 (S31). The cooking guide module 200 disposed in one of the cooking apparatus 100 or the server 500 with which the cooking apparatus 100 communicates performs the food material recognition process on the image of the food material captured by the camera (S32, S33). In this case, guide information is optionally generated. That is, only the food material recognition process may be performed without generating guide information. Alternatively, the cooking guide module 200 may generate cooking guide information (e.g., 5-minute browning, 10-minute heating, and the like) for the recognized food material.

The cooking guide module 200 generates first schedule information necessary to determine the cooking state of the food material (S35). In addition, the cooking guide module 200 may recognize the cooking state according to the first schedule information during the heating process of the food material to generate new first guide information and provide the generated first guide information to the cooking apparatus 100 (S36, S41 to S46 of FIG. 4).

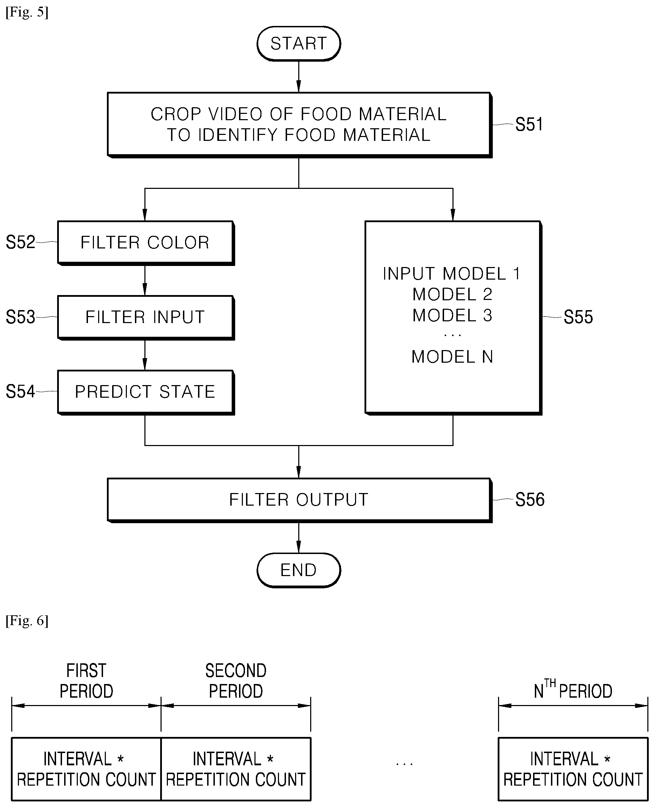

FIG. 5 is a view illustrating a detailed process of the food material recognition process according to one embodiment of the present invention.

When the user starts cooking by placing the food material into the cooking apparatus 100 and setting a specific browning level (light, medium, strong, or using a dial or the like), the camera secure a video of the food material and provides the secured video to the cooking guide module 200.

The cooking guide module 200 may determine the cooking state according to the image of the food material and the set target state information as illustrated in FIG. 5.

First, the cooking guide module 200 performs cropping to identify the food material in the video of the food material (S51). After cropping, a color vision (CV) module of the cooking guide module 200 performs operations S52 to S54, and a deep learning classification module performs operation S55.

Specifically, the CV module performs color filtering (S52). A filtering, which compares the current status of the food material using a desired color (e.g., brown) of the final cooking state of the food material, is performed. In addition, the filtered result is input (input filtering, S53) and the state of the food material is predicted based on the input result (state prediction, S54).

The CV module may include an algorithm for processing legacy videos in data-insufficient environments and determines a cooking level by comparing a reference color chart with a color of the cropped image.

Accordingly, the cooking guide module 200 may perform brown color filtering for bread. Since color changes that occur during the cooking process vary depending on the food material, the cooking guide module 200 may select a color appropriate for the corresponding food material.

Meanwhile, the DL classification model inputs cropped images of the food materials into N models. The DL classification model applies a data-based object recognition algorithm. Using models 1 to N trained with data labeled with cooking states for food material by dish, a state most similar to the current cooking status is determined.

A combined process of operations S52 to S54 and an operation S55 may be performed simultaneously or sequentially.

Output filtering S56 performed by the cooking guide module 200 includes outputting a browning level (cooking level) based on the results. Alternatively, the cooking guide module 200 may output a value indicating how much the browning level desired by the user has been achieved.

The embodiment of FIG. 5 corresponds to one embodiment of the present invention, and the present invention may apply various other methods of recognizing a food material and determining a heating level.

The process of recognizing a food material and determining a cooking level in FIG. 5 may be repeatedly performed. However, a process of recognizing and identifying an image requires computing power. When the cooking guide module 200 is disposed in the cooking apparatus 100, it may take time for the cooking guide module 200 to perform predetermined image recognition, image processing, and comparison.

In addition, when the cooking guide module 200 is disposed in the server 500, it may also take time for the cooking apparatus 100 to transmit images to the server 500 and receive the results. In addition, the transmission of images may impose a burden on a network.

Accordingly, the present specification describes a process in which the cooking guide module 200 uses a current status of the food material and target state information to preset a cooking state recognition period and operates accordingly.

Hereinafter, the structure of the schedule information generated by the cooking guide module 200 to check the cooking state of the food material will be described.

FIG. 6 is a view illustrating a configuration of schedule information according to one embodiment of the present invention.

Depending on the type or current status of the food material or the browning level (target state information) specified by the user, the cooking guide module 200 divides an estimated cooking time into one or more periods, and for each period, the cooking guide module 200 sets a period for recognizing and identifying the cooking state of the food material. Each period may consist of an interval and a repetition count. A final period (n^{th} period) may include information on an interval and a repetition count or only the interval.

During a first period, the camera 110 of the cooking apparatus 100 captures an image of the state of the food material inside the cooking chamber and provides a video to the cooking guide module 200 at a set interval (e.g., 10 seconds, 20 seconds, or 30 seconds) for the first period. After providing the set number of videos for the first period, the camera 110 provides videos to the cooking guide module 200 for a second period in the same manner. When the cooking guide module 200 is disposed in the server 500, the apparatus communicator 190 may transmit the videos to the server 500.

Schedule information on the entire cooking period may be divided into n periods. In one embodiment, the schedule information may include three periods, and in this case, the first period may correspond to an initial level, the second period to a middle level, and the third period to a final level. The cooking guide module 200 may apply an appropriate period to each recognized food material based on various experimental data and the type of each food material.

Then, when cooking is repeated, the cooking apparatus 100 may learn the optimized period levels based on cooking information data, such as a user-set cooking menu, post-cooking feedback, and the like, and change a generation routine of the schedule information accordingly.

As illustrated in FIG. 6, the schedule information includes information on one or more periods, including the interval (time interval) and repetition count for recognizing the cooking state of the food material.

As illustrated in FIGS. 3 and 6, the cooking guide module 200 may generate periods based on the type and current status of the food material and target state information set for the food material. In addition, one or more of these periods constitute the schedule information.

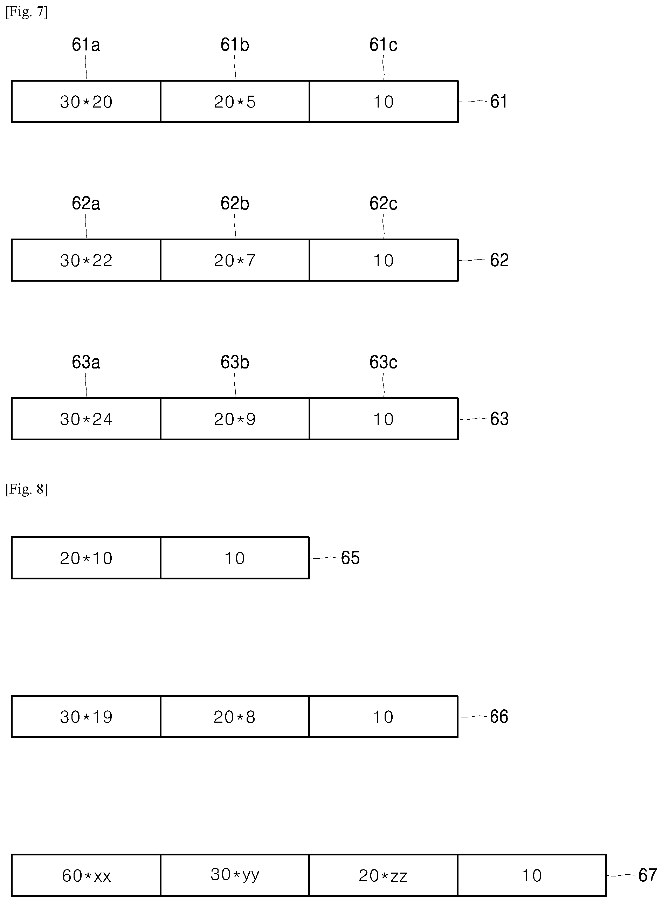

FIG. 7 is a view illustrating an example in which the schedule information is set according to a browning level according to one embodiment of the present invention. This is an embodiment in which the configuration of the schedule information of FIG. 6 is applied.

When three browning levels, that is, light (light), medium (medium), and dark (strong), may be set for a specific food material, the cooking guide module 200 may set an image-checking period according to each level, as shown in 61 to 63.

61 represents cooking the food material at a light (light browning) level, which takes 15 minutes. During a first period 61a of 15 minutes, the cooking guide module 200 monitors the cooking state of the food material 20 times at 30-second intervals (30*20). The camera 110 captures images every 30 seconds for the first period and provides the images to the cooking guide module 200. During the second period 61b, the cooking guide module 200 monitors the cooking state of the food material 5 times at 20-second intervals (20*5). The camera 110 captures images every 20 seconds for the first period and provides the images to the cooking guide module 200.

During the third period 61c, the cooking guide module 200 continuously monitors the cooking state of the food material at 10-second intervals. The camera 110 captures images every 10 seconds for the third period and provides the images to the cooking guide module 200.

61 represents the schedule information corresponding to the light level, and the number may vary depending on the type or current status of the food material.

Likewise, 62 represents cooking the food material at the medium (medium) level, which takes 20 minutes. During a first period 62a of 20 minutes, the cooking guide module 200 monitors the cooking state of the food material 22 times at 30-second intervals (30*22). The camera 110 captures images every 30 seconds for the first period and provides the images to the cooking guide module 200. During the second period 62b, the cooking guide module 200 monitors the cooking state of the food material 7 times at 20-second intervals (20*7). The camera 110 captures images every 20 seconds for the first period and provides the images to the cooking guide module 200.

During the third period 62c, the cooking guide module 200 continuously monitors the cooking state of the food material at 10-second intervals. The camera 110 captures images every 10 seconds for the third period and provides the images to the cooking guide module 200.

62 represents the schedule information corresponding to the medium level, and the number may vary depending on the type or current status of the food material.

63 represents cooking the food material at a dark (strong) level, which takes 25 minutes. During a first period 63a of 25 minutes, the cooking guide module 200 monitors the cooking state of the food material 24 times at 30-second intervals (30*24). The camera 110 captures images every 30 seconds for the first period and provides the images to the cooking guide module 200.

During the second period 63b, the cooking guide module 200 monitors the cooking state of the food material 9 times at 20-second intervals (20*9). The camera 110 captures images every 20 seconds for the first period and provides the images to the cooking guide module 200.

During the third period 63c, the cooking guide module 200 continuously monitors the cooking state of the food material at 10-second intervals. The camera 110 captures images every 10 seconds for the third period and provides the images to the cooking guide module 200.

63 represents the schedule information corresponding to the dark level, and the number may vary depending on the type or current status of the food material.

The schedule information in FIG. 7 may be provided to the cooking apparatus 100 together with the cooking guide module 200 during the process of providing guidance information on the appropriate cooking level for the corresponding food material after the food material is first placed into the cooking apparatus 100.

Alternatively, when the user sets target state information for the food material, the cooking guide module 200 may calculate the cooking time required for the food material to reach the target state information and then generate schedule information. The schedule information may vary depending on the state of the food material during the cooking process.

According to the embodiment of FIG. 7, the cooking time period may vary depending on the browning level set by the user. Since the cooking time varies depending on the browning level, such as light, medium, and dark, the cooking guide module 200 monitors the browning state using schedule information (period time per period) appropriate for each level.

FIG. 8 is a view illustrating schedule information set for each food material according to one embodiment of the present invention. FIG. 8 illustrates schedule information for cooking each food material at a medium level.

For example, when a croissant is instructed to be heated for 8 minutes, the cooking guide module 200 may generate schedule information including the first period (10 times at 20-second intervals) and the second period (continuously at 10-second intervals), as shown in 65.

For a baguette, the cooking guide module 200 may generate schedule information including the first period (19 times at 30-second intervals), the second period (8 times at 20-second intervals), and the third period (continuously at 10-second intervals), as shown in 66.

For frozen meat, the cooking guide module 200 may generate schedule information including the first period (xx times at 60-second intervals), the second period (yy times at 30-second intervals), the third period (zz times at 20-second intervals), and a fourth period (continuously at 10-second intervals), as shown in 67.

According to FIG. 8, the cooking time period varies depending on the type of food material and menu criteria. For dishes with short cooking times, the cooking guide module 200 may generate schedule information to have a short period.

On the other hand, for a cooking menu with a long cooking time, as shown in 67, the cooking guide module 200 may set the schedule information such that longer interval times (e.g., 60 seconds and 30 seconds) are applied in earlier periods (the first period and the second period), and shorter interval times (e.g., 10 seconds) are applied as the cooking approaches completion (the fourth period) and monitor the browning state of the food material.

According to the embodiments of FIGS. 7 and 8, the schedule information may include two or more periods. Here, the schedule information may include the first period and the second period following the first period.

The first period includes information defining a first interval for recognizing a cooking state of a food material and a repetition count of the first interval.

The second period defines a second interval shorter than the first interval to recognize the cooking state of the food material.

For example, in the schedule information 61 of FIG. 7, when the first period is 61a, the repetition count of the first interval (30 seconds) is defined as 20. The subsequent second period may be 61b, and the repetition count of the second interval (20 seconds) is defined as five.

That is, the periods of the schedule information may be set so that an interval, which is a period for checking a food material, decrease over time.

Accordingly, an interval of the following period (subsequent period) is set to be shorter than that of a preceding period. When the subsequent period is the last period, the repetition count may be omitted.

Even in the embodiment of FIG. 8, the schedule information indicated by 65 also defines the repetition count as ten at 20-second intervals for the first period and as 10-second intervals for the second period. The interval (10 seconds) of the second period is shorter than the interval (20 seconds) of the first period.

In this way, since the schedule information is set such that the intervals for food material recognition defined in subsequent periods become shorter as cooking progresses, the cooking state of the food material can be detected more precisely.

The order of the periods in the schedule information and the order for recognizing the cooking state may be preset, or the order may be written in the schedule information.

In the schedule information of FIGS. 7 and 8, each period sequentially matches each cooking time.

According to another embodiment, the order matching the cooking may be separately described in the schedule information.

For example, for 61 in FIG. 7, period information may be set in reverse order, such as {{3, 2, 1}, {10}, {20*5}, {30*2}}.

In {3, 2, 1}, the first 3 is a period applied to a third time point of the three periods, which corresponds to {10}. The second 2 is a period applied to a second time point of the three periods, which corresponds to {20*5}. The third 1 is a period applied to a first time point of the three periods, which corresponds to {30*2}. In this way, the order described in the schedule information may not necessarily match the order applied during cooking. Even in this case, the meaning of preceding and following/subsequent periods corresponds to the order of time points applied during cooking.

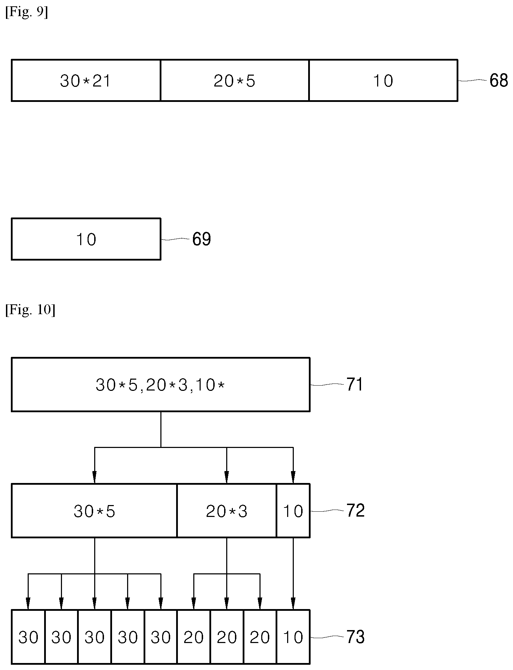

FIG. 9 is a view illustrating schedule information set according to an initial browning level according to one embodiment of the present invention.

When the food material is not cooked at all, the cooking guide module 200 may monitor the cooking state of the food material according to three types of periods, as shown in 68. Since the food material is not heated, in the first period, which corresponds to the beginning, the cooking guide module 200 may set the first period to a long time (30*21, 10 minutes 30 seconds) and the second period to a short time (20*5, 1 minute 40 seconds), as shown in 68, and monitor the state of the food material at 10-second intervals thereafter.

When the food material is partially cooked, the cooking guide module 200 may monitor the cooking state of the food material according to a single period (e.g., 10-second intervals), as shown in 69.

As illustrated in FIG. 9, the cooking guide module 200 may determine the cooking time period by identifying the initial state of the placed food material and set or change the schedule information.

FIG. 10 is a view illustrating a process in which the cooking apparatus decodes the schedule information provided by a cooking guide module according to one embodiment of the present invention. 71, 72, and 73 are all one embodiment of the schedule information.

The cooking guide module 200 may generate schedule information based on the type, physical characteristics, current status, and target state information of the food material and provide the schedule information to the cooking apparatus 100 in the form of a string.

The cooking guide module 200 may generate schedule information composed of a string of "30*5, 20*3, 10*," as shown in 71, and provide the schedule information to the cooking apparatus 100. Each period is separated by a comma.

The cooking apparatus 100 divides the corresponding string, as shown in 72, dequeues the divided string for each period, and sets a schedule according to the time interval and repetition count, as shown in 73.

Thereafter, according to the schedule information, as shown in 73, the cooking apparatus 100 may acquire a video of the placed food material and provide the acquired video to the cooking guide module 200.

Each number in the schedule information is a variable regarding a period for recognizing a food material and identifying a state thereof. To recognize the browning state, the cooking guide module 200 may input video information and meta information into a food material recognizer according to the schedule information, and the schedule information is a variable regarding the time interval for food material recognition.

The cooking guide module 200 may divide the cooking section into stages according to the food material and the target state information and set the schedule information to acquire input information at large intervals at the beginning of cooking and then at very short intervals at the end of cooking, thereby accurately recognizing whether the target state information has been reached depending on the heating state of the food material.

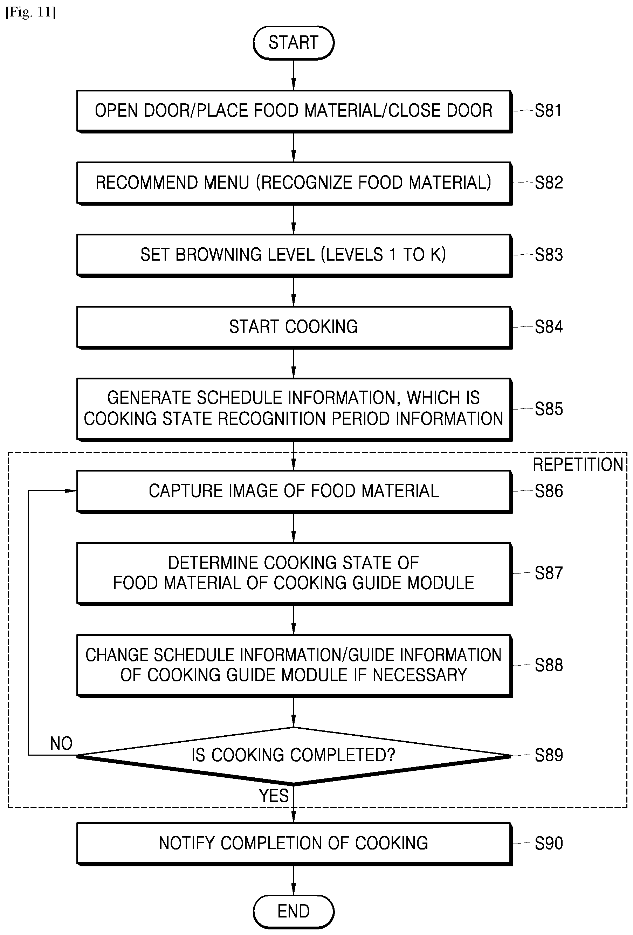

FIG. 11 is a view illustrating a process of checking a cooking state during cooking of the cooking apparatus according to one embodiment of the present invention.

When a user opens a door of the cooking apparatus 100, places the food material (cooking object), and closes the door (S81), the camera 110 recommends a menu appropriate for the corresponding food material (S82). To this end, the cooking guide module 200 may perform the food material recognition process for the food material previously described in FIG. 3.

Using the video of the food material, the cooking guide module 200 may identify the physical characteristics, such as type, size, weight, and the like of the food material. In addition, the cooking guide module 200 may provide guide information on the corresponding food material based on the type and physical characteristics of the food material. The guide information may be displayed as a menu recommendation on the cooking apparatus 100 or a connected user terminal.

The guide information may include cooking times, cooking levels (e.g., low, medium, or high as heating temperature), or cooking result states (light, medium, or strong as a browning level).

For example, when it is determined that the food material is a cookie, the cooking guide module 200 may generate guide information for light cooking (10 minutes, light browning level) and medium cooking (15 minutes, medium browning level) and provided the generated guide information to the cooking apparatus 100.

The user may select one of the guide information provided to the food material or change the time, intensity, and the like within the provided guide information. This is referred to as a browning setting operation (S83).

The browning setting may be performed in various ways depending on a cooking time, a cooking heating level, or the like (operations 1 to K) (S83). Thereafter, when the user presses a cooking start button, cooking starts (S84). Meanwhile, the cooking guide module 200 generates schedule information, which is period information that recognizes the cooking state, based on the browning setting operation set in S83 (S85).

The cooking guide module 200 may generate target state information based on the browning setting operation. When the food material is bread and the browning level is set to medium, the cooking guide module 200 may generate target state information for the food material using images of bread previously acquired and cooked to a medium browning level. This is exemplified by the cooking guide module 200 changing the color of the video of the food material.

During the process of generating schedule information, the cooking guide module 200 may use information on the food material, for example, information on a cooking level of the food material identified in the video, a position of a rack, quantity, weight, etc.

When the cooking guide module 200 is disposed within the cooking apparatus 100, the cooking guide module 200 may provide schedule information to the apparatus controller 150 so that the camera 110 may acquire videos according to the schedule information.

On the other hand, when the cooking guide module 200 is disposed within the server 500, the cooking guide module 200 may transmit the schedule information to the apparatus communicator 190 of the cooking apparatus 100, and the apparatus communicator 190 may provide the schedule information to the apparatus controller 150 so that the camera 110 may acquire the videos according to the schedule information.

Thereafter, the camera 110 captures an image of the food material in the cooking chamber according to the schedule information (S86). In addition, the captured videos are provided to the cooking guide module 200, and the cooking guide module 200 determines the cooking state of the food material (S87). During the determination process, the target state information may be compared with the cooking state of the food material. In addition, the cooking guide module 200 may change the schedule information and the guide information depending on whether the food material is cooked at an appropriate speed according to the schedule information (S88).

For example, it is assumed that the cooking guide module 200 generates schedule information, such as 61 of FIG. 7, for baking bread to a medium level in operation S85.

In the cooking guide module 200, a color value of the target state information is set to Color_Target, a color value for comparison with the first period is set to Color_Period1, a color value for comparison with the second period is set to Color_Period2, and a color value for comparison with the third period is set to Color_Period3.

In addition, as shown in 61 of FIG. 7, the first period is set to perform monitoring 20 times at 30-second intervals. However, as a result of comparing the color value identified in a 10^{th} browning state (i.e., a color state) of the bread, that is, the current status of the food material, with Color_Period2, the cooking guide module 200 may determine that the bread is being cooked faster than the schedule information generated in operation S85. In this case, the cooking guide module 200 may change the schedule information according to the current status of the bread.

That is, for the schedule information generated as "30*20, 20*5, 10*" in operation S85, the cooking guide module 200 may generate changed schedule information, such as "20*3, 10*," and provide the schedule information to the cooking apparatus 100 (S88). In addition, the cooking guide module 200 may generate guide information indicating that the cooking time has been shortened. For example, after the guide information including a cooking time of 15 minutes appropriate for the food material in operations S81 to S85 is provided, the cooking guide module 200 may generate guide information reducing the cooking time to 12 minutes and provide the generated guide information to the cooking apparatus 100.

During this process, the cooking apparatus 100 may determine that the cooking time has been shortened according to the target cooking information set for the food material.

In addition, the cooking apparatus 100 may determine whether cooking has been completed (S89), and when cooking is not completed, operations S86 to S88 may be repeated.

In addition, upon completion of cooking, the cooking apparatus 100 may notify that the cooking has been completed (S90).

Operations S86 to S89 may be repeated as the process of recognizing the cooking state, and during this process, when the food material is cooked quickly or slowly, the cooking guide module 200 may change the schedule information and/or the guide information.

As describe in FIGS. 4 and 11, the cooking guide module 200 may compare the current status of the food with previously generated schedule information to generate new schedule information corresponding to the target state information of the food material.

In addition, the cooking guide module 200 may compare the current status of the food material with the target state information to change the previously generated guide information and generate new guide information. The guide information may include cooking time, heating intensity, and the like or include information on increased or decreased cooking time or increased or decreased heating intensity compared to previously set guide information.

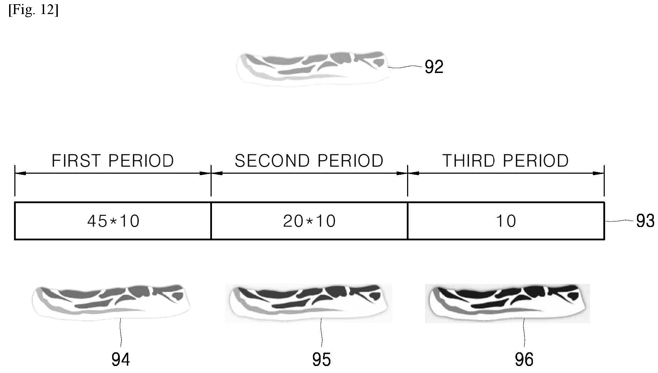

FIG. 12 is a view illustrating a process of generating color information of a food material and checking a cooking state according to one embodiment of the present invention.

The cooking guide module 200 generates color information for the food material corresponding to the period. During the process of checking the cooking state, the cooking guide module 200 compares the captured image corresponding to the period with the color information. As a result, the cooking guide module 200 may identify cases in which the color information corresponding to the period differs. This corresponds to cases in which the food material is overcooked or undercooked. This will be described in detail with reference to FIG. 12.

The image captured by the camera 110 of the placed food material is shown as 92. As a result of performing the food material recognition process on the image, the cooking guide module 200 determines that the corresponding food material is meat. The cooking guide module 200 generates schedule information, shown as 93 based on the target state information (strong) set by the user for the meat, which is the food material.

In addition, the cooking guide module 200 generates color information 94 indicating an estimated color of the food material when heated for the first period (45*10). 94 is the result of applying RGB color values based on the browning level or applying color conversion to the image of 92.

Likewise, the cooking guide module 200 generates color information 95 indicating an estimated color of the food material when heated for the second period (20*10) following the first period. In addition, for the last period (third period), the cooking guide module 200 generates color information 96 by applying color conversion based on the target state information.

Then, the cooking guide module 200 compares the current status of the food material captured for each period with the color information for each period. As a result, the cooking guide module 200 produces a first result by comparing similarity between the current status of the food material captured for the first period and 94. In addition, the cooking guide module 200 produces a second result by comparing similarity between the current status of the food material captured for the first period and 95.

When the second result is higher than the first result, the cooking guide module 200 may generate new schedule information and provide the information to the cooking apparatus 100 in order to terminate the first period and enter the second period.

That is, the cooking guide module 200 generates color information of the food material corresponding to the period. In addition, the cooking guide module 200 may compare the image captured in response to the period with the color information to adjust the cooking time and change the schedule information during the process of checking the cooking state.

According to the above embodiments, the cooking apparatus 100 may set periods (or number of captures) for capturing and recognizing the cooking state in various ways depending on the characteristics of the food material and the target state in which the user wishes to cook.

The cooking guide module 200 determines a browning level based on cooking information (cooking menu, browning setting stage, or the like) and pre-cooking videos to generate schedule information on a period for capturing and recognizing an optimal cooking state, and the cooking apparatus 100 captures videos based on the schedule information and provides the captured videos to the cooking guide module 200.

When the amount of food material is very small, the food material may be heated quickly, and thus the cooking guide module 200 may generate schedule information to check the videos of the food material at short intervals to enable recognition of the cooking state from the beginning of the cooking process.

Conversely, when the amount of food material is large, the food material may be heated slowly, and thus the cooking guide module 200 generates schedule information to set a long time interval for video recognition in the beginning (first period) and a short time interval for video recognition after the middle of the cooking process. As a result, the cooking guide module 200 can precisely determine the state of the food material from the middle of the cooking process.

To this end, the cooking apparatus 100 may use a long capturing interval in the beginning. In addition, the cooking apparatus 100 may not perform capturing until the middle of the cooking process. In addition, from the midpoint of the estimated cooking time, the cooking guide module 200 may acquire and recognize the videos of the food material at short intervals.

That is, even after generating browning setting stage values and capturing start and state recognition period values according to the food material menu, the cooking guide module 200 may change or newly generate the schedule information by reflecting changes due to heating of the food material.

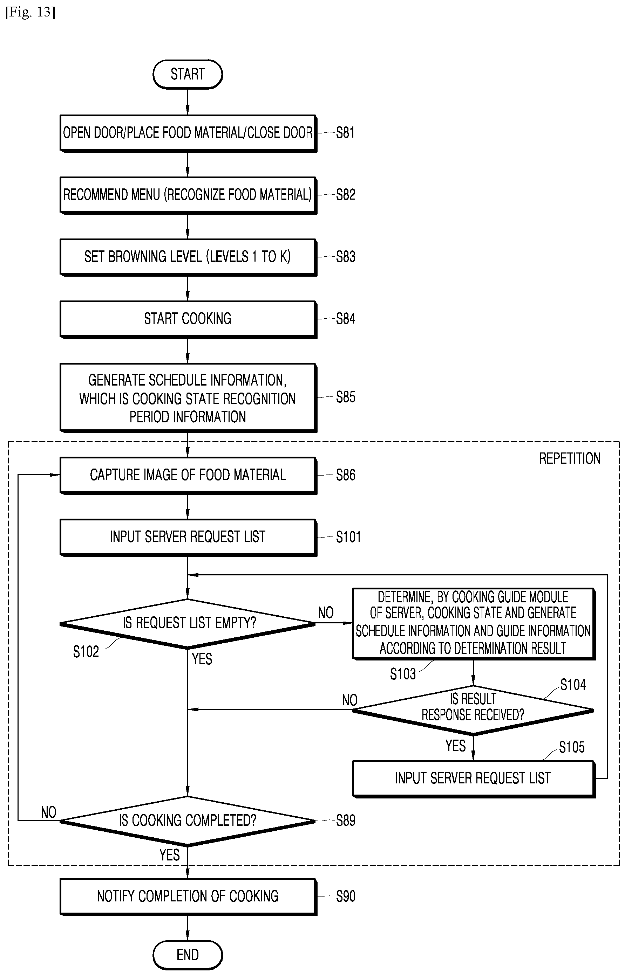

FIG. 13 is a view illustrating a process when a cooking guide module according to one embodiment of the present invention is disposed in a server. Operations S81 to S85 are the same as those described above in FIG. 11.

When cooking stars, the cooking apparatus 100 captures the videos of the food material according to the schedule information (S86) and input the captured videos into a server request list (S101). When the server request list includes the videos (i.e., when the server request list is not empty) (S102), the controller 150 controls the communicator 190 to transmit the videos of the food material to the server 500.

The cooking guide module 200 disposed in the server 500 uses the transmitted videos to determine the cooking state (S103). In addition, the cooking guide module 200 may generate schedule information and guide information based on the result of determining the cooking state of the food material (S103).

In addition, the server 500 transmits the result to the cooking apparatus 100, and when receiving a result response (Yes in S104), the cooking apparatus 100 removes the processed video from the server request list (S105).

Conversely, when failing to receive the result response (No in S104), the cooking apparatus 100 proceeds to operation S89. Depending on whether cooking has been completed in operation S89, the cooking apparatus 100 proceeds to operation S90 or S86.

To summarize, the process is as follows.

The camera 110 of the cooking apparatus 100 captures a video of a cooking object, that is, a food material, and inputs the captured video into the server request list (list for requesting the state of the food material from the server) (S85, S101). In addition, when information is included in the request list, the controller 150 of the cooking apparatus 100 transmits the information to the server 500 to determine the cooking state (S102, S103).

The information transmitted at this time may include, in addition to the video, capturing time information, a food material menu, target state information set for the food material, etc.

When receiving the result response from the server 500, the cooking apparatus 100 removes items related to information, such as videos, from the server request list (S104, S105).

When failing to receive the result response from the server 500, the cooking apparatus 100 waits for the cooking state recognition period according to the schedule information, captures the video of the food material, and inputs the information into the server request list (S86, S101).

This process is repeated continuously unless the request list containing the captured videos is empty in order to recognize the state of the food material at the server side.

The cooking apparatus 100 checks cooking completion (S89), and when the result is "No," the cooking apparatus 100 waits for the time interval (cooking state recognition period) of the corresponding period in the schedule information and then repeats the process from operation S86.

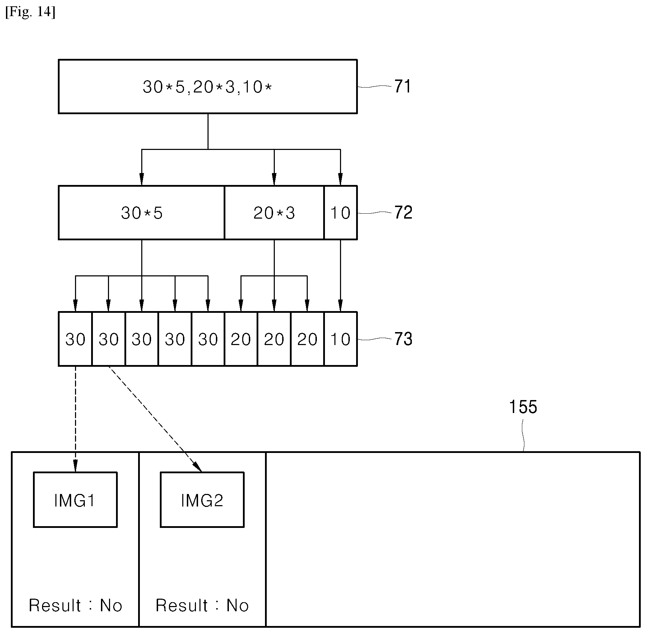

FIG. 14 is a view illustrating a process of adding videos to a request list according to one embodiment of the present invention. FIG. 14 is an embodiment in which the cooking apparatus 100 applies the schedule information of FIG. 10 to capture the video of the food material and request recognition of the captured video.

The cooking apparatus 100 adds an image IMG1 of the food material captured at a first 30-second time point to a request list 155 according to the set period (five transmission at 30-second intervals) for the first period. The controller 150 transmits IMG1 of the request list 155 to the server 500.

When it takes 30 seconds or more to receive the result after transmitting IMG1 due to a network load, the controller 150 adds an image IMG2 of the food material captured at a second 30-second time point to the request list 155. The controller 150 transmits IMG2 of the request list 155 to the server 500.

The server 500 determines the state of the food material for each of the received IMG1 and IMG2. In addition, when new schedule information or new guide information needs to be generated based on the cooking state of the food material, the new schedule information or guide information is generated and included in the result. In addition, the server 500 transmits the result to the cooking apparatus 100.

The cooking apparatus 100 receiving the result for the transmitted image removes the image with the transmitted result from the request list 155.

When there is no network load, IMG1 is deleted first, and then IMG2 is deleted. On the other hand, when there is the network load, it may be difficult to maintain such an order. In this case, the cooking apparatus 100 removes only the images with the transmitted result from the request list 155.

The cooking apparatus 100 reflects any changes in the schedule information or guide information in the result transmitted by the server 500.

According to FIGS. 13 and 14, the apparatus controller 150 adds the image captured by the camera 110 to the request list according to the schedule information (S101). In addition, the apparatus controller 150 controls the apparatus communicator 190 to transmit the image included in the request list to the server 500, and then receives a determination result from the server 500 (S104). When receiving the determination result corresponding to the transmitted image, the apparatus controller 150 deletes the image from the request list (S105).

According to the embodiment of the present invention, the cooking apparatus 100 captures the video of the cooking state of the food material, and the cooking guide module 200 disposed in the cooking apparatus 100 or the server 500 may determine the cooking state, thereby and thus reducing the user's inconvenience of having to open the door to check whether cooking has been completed. In addition, the cooking apparatus 100 may notify the user of a desired cooking state, thereby enhancing the enjoyment of cooking. For example, when the cooking state is checked according to the schedule information and then cooking is terminated after 30 seconds, the cooking guide module 200 may provide guide information on the completion of cooking to the cooking apparatus 100, and the cooking apparatus 100 may output a voice message stating "Cooking will be completed in 30 seconds." via the speaker 180.

In addition, when cooking is completed, the cooking apparatus 100, such as an oven, may provide a notification in advance or provide the notification to a smartphone app connected to the cooking apparatus 100, thereby preventing overcooking of the food material.

The cooking guide module 200 according to the embodiment of the present invention may provide a cooking completion notification function by recognizing the state of the cooking object inside the cooking chamber of the oven. That is, the guide information may include information on a time point at which cooking is completed, information on a set temperature or time of the cooking apparatus required to complete cooking, etc.

An oven to which the embodiment of the present invention is applied is assumed. The user may place a cooking object, which is a food material, in the oven, set a desired cooking state level (browning level, such as light, medium, strong), and press a start cooking button. When cooking starts, the oven communicates with the cooking guide module 200, which recognizes the cooking state, to secure a video acquisition period (schedule information) capable of adequately recognizing the cooking object.

In this case, when the cooking guide module 200 is disposed within the cooking apparatus 100, the oven performs internal communication. On the other hand, when the cooking guide module 200 is disposed in the server 500, the oven performs external communication with the server.

The schedule information defines the video acquisition period, and the cooking guide module 200 may generate the schedule information in various ways based on a browning level set for a food material (e.g., target cooking information), a cooking menu, a browning level, etc.

The oven controls the camera 110 to capture videos according to the period set for the schedule information. The oven provides the cooking guide module 200 with the video of the cooking object inside the cooking chamber of the oven.

When the cooking guide module 200 is disposed in the server 500, the supplementary algorithm described in FIGS. 13 and 14 may be applied to address delays and omissions in image recognition results during the process of transmitting information to the server via a network.

Meanwhile, during the process of recognizing the food material, the cooking guide module 200 may use a recognizer trained using deep learning and computer vision algorithms to generate patterns representing levels of cooking state or load stored patterns to check the cooking state of the food material. The cooking guide module 200 may compare pattern information (e.g., color information for each stage of the food material) with the video of the cooking state of the food material captured by the cooking apparatus 100 to control the cooking process of the cooking apparatus 100 or provide the cooking apparatus 100 with guidance information on cooking completion, an increase in cooking time, etc.

When the cooking guide module 200 is disposed in the cooking apparatus 100, the cooking guide module 200 may use such pattern information (e.g., color information for each stage of the food material) to determine whether the cooking state has been reached.

Alternatively, when the cooking guide module 200 is disposed in the server 500, the server 500 may provide the cooking apparatus 100 with pattern information (e.g., color information for each stage of the food material), and the apparatus controller 150 of the cooking apparatus 100 may compare the pattern information with the food material in the oven.

Alternatively, when the cooking guide module 200 is disposed in the server 500, the server 500 may compare the pattern information (e.g., color information for each stage of the food material) with the cooking state of the food material transmitted by the cooking apparatus 100 to control the cooking process of the cooking apparatus 100 or provide the cooking apparatus 100 with guide information on cooking completion, an increase in cooking time, etc.

According to the guide information guiding the completion of cooking or the increase in cooking time, the cooking apparatus 100, for example, an oven, may provide a sound and a pop-up and also provide the cooking completion notification to a smartphone app.

Even though all components constituting the embodiments of the present invention have been described as being coupled or coupled and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments constituting the computer program can be easily inferred by those skilled in the art. Such a computer program may be stored in a computer-readable storage medium and read and executed by a computer, thereby implementing the embodiments of the present invention. The storage media for computer programs include magnetic recording media, optical recording media, and storage media including semiconductor recording devices. In addition, a computer program implementing the embodiments of the present invention includes program modules transmitted in real time through an external device.

The above description focuses on the embodiments of the present invention, but various changes and modifications may be made within the scope of those skilled in the art. Accordingly, it will be understood that these changes and modifications are included within the scope of the present invention as long as they do not depart from the scope of the present invention.

### [Descriptions of reference numerals]

100: cooking apparatus 110: camera
120: display module 150: apparatus controller
200: cooking guide module 500: server

## Claims

1. A cooking apparatus for cooking a food material, comprising:
a main body configured to heat the food material;
a camera configured to capture the food material placed in the main body;
a cooking guide module configured to perform a food material recognition process on an image of the food material captured by the camera, generate first schedule information for checking a cooking state of the food material, and recognize the cooking state according to the first schedule information during a heating process of the food material to provide first guide information; and
an apparatus controller configured to control the main body, the camera, and the cooking guide module.

2. The cooking apparatus of claim 1, wherein the first schedule information includes information on one or more periods including an interval and a repetition count for recognizing the cooking state of the food material.

3. The cooking apparatus of claim 2, wherein the cooking guide module generates the periods based on a type and current status of the food material, and target state information set for the food material.

4. The cooking apparatus of claim 3, wherein the cooking guide module compares the current status of the food material with the first schedule information to generate second schedule information corresponding to the target state information of the food material.

5. The cooking apparatus of claim 4, wherein the cooking guide module compares the current status of the food material with the target state information to change the first guide information and generates second guide information.

6. The cooking apparatus of claim 2, wherein the cooking guide module generates color information of the food material corresponding to the period, and the cooking guide module compares an image captured corresponding to the period with the color information during the process of checking the cooking state.

7. The cooking apparatus of claim 2, wherein the first schedule information includes a first period and a second period following the first period,
the first period defines a first interval and a repetition count of the first interval for recognizing the cooking state of the food material, and
the second period defines a second interval shorter than the first interval to recognize the cooking state of the food material.

8. A cooking apparatus for cooking a food material, comprising:
a main body configured to heat the food material;
a camera configured to capture the food material placed in the main body;
an apparatus communicator configured to communicate with a server; and
an apparatus controller configured to receive first schedule information and first guide information from the server and control the apparatus communicator and the camera to transmit an image captured by the camera to the server according to the first schedule information.

9. The cooking apparatus of claim 8, wherein the first schedule information includes information on one or more periods including an interval and a repetition count for recognizing the cooking state of the food material.

10. The cooking apparatus of claim 9, wherein the cooking guide module generates the periods based on a type and current status of the food material, and target state information set for the food material.

11. The cooking apparatus of claim 10, wherein the cooking guide module compares the current status of the food material with the first schedule information to generate second schedule information corresponding to the target state information of the food material.

12. The cooking apparatus of claim 11, wherein the cooking guide module compares the current status of the food material with the target state information to change the first guide information and generates second guide information.

13. The cooking apparatus of claim 9, wherein the cooking guide module generates color information of the food material corresponding to the period, and the cooking guide module compares an image captured corresponding to the period with the color information during the process of checking the cooking state.

14. The cooking apparatus of claim 8, wherein the apparatus controller adds the image captured by the camera to a request list according to the first schedule information,
the apparatus controller controls the apparatus communicator to transmit an image included in the request list to the server, and then receives a determination result from the server, and
the apparatus controller deletes the image from the request list when receiving a determination result corresponding to the transmitted image.

15. The cooking apparatus of claim 9, wherein the first schedule information includes a first period and a second period following the first period,
the first period defines a first interval and a repetition count of the first interval for recognizing the cooking state of the food material, and
the second period defines a second interval shorter than the first interval for recognizing the cooking state of the food material.

16. A server comprising:
a server communicator configured to communicate with a cooking apparatus that cooks a food material;
a cooking guide module configured to perform a food material recognition process on an image of the food material transmitted by the cooking apparatus, generate first schedule information for checking a cooking state of the food material, and recognize the cooking state according to the first schedule information during a heating process of the food material to provide first guide information; and
a server controller configured to control the server communicator and the cooking guide module to transmit the first schedule information and the first guide information to the cooking apparatus.

17. The server of claim 16, wherein the first schedule information includes information on one or more periods including an interval and a repetition count for recognizing the cooking state of the food material.

18. The server of claim 16, wherein the cooking guide module generates the periods based on a type and current status of the food material, and target state information set for the food material.

19. The server of claim 18, wherein the cooking guide module compares the current status of the food material with the first schedule information to generate second schedule information corresponding to the target state information of the food material.

20. The server of claim 19, wherein the cooking guide module compares the current status of the food material with the target state information to change the first guide information and generates second guide information.

21. The server of claim 17, wherein the cooking guide module generates color information of the food material corresponding to the period, and the cooking guide module compares an image captured corresponding to the period with the color information during the process of checking the cooking state.

22. The server of claim 17, wherein the first schedule information includes a first period and a second period following the first period,
the first period defines a first interval and a repetition count of the first interval for recognizing the cooking state of the food material, and
the second period defines a second interval shorter than the first interval to recognize the cooking state of the food material.

23. A method of controlling a cooking process according to a cooking state, the method comprising:
capturing, by a camera of a cooking apparatus, an image of a food material placed in a main body of the cooking apparatus;
performing, by a cooking guide module disposed in any one of the cooking apparatus or a server configured to communicate with the cooking apparatus, a food material recognition process on the image of the food material captured by the camera;
generating, by the cooking guide module, first schedule information for checking the cooking state of the food material; and
recognizing, by the cooking guide module, the cooking state according to the first schedule information during a heating process of the food material to generate first guide information and providing the first guide information to the cooking apparatus.

24. The method of claim 23, wherein the first schedule information includes information on one or more periods including an interval and a repetition count for recognizing the cooking state of the food material.

25. The method of claim 24, further comprising generating, by the cooking guide module, the periods based on a type and current status of the food material and target state information set for the food material.

26. The method of claim 25, further comprising comparing, by the cooking guide module, the current status of the food material with the first schedule information to generate second schedule information corresponding to the target state information of the food material.

27. The method of claim 26, further comprising comparing, by the cooking guide module, the current status of the food material with the target state information to change the first guide information and generating second schedule information.

28. The method of claim 24, further comprising:
generating, by the cooking guide module, color information of the food material corresponding to the period; and
comparing, by the cooking guide module, an image captured corresponding to the period with the color information during a process of checking the cooking state.

29. The method of claim 23, further comprising:
when the cooking guide module is disposed in the cooking apparatus,
adding, by an apparatus controller of the cooking apparatus, the image captured by the camera to a request list according to the first schedule information;
controlling, by the apparatus controller, an apparatus communicator of the cooking apparatus to transmit an image included in the request list to a server, and then receiving a determination result from the server; and
deleting, by the apparatus controller, the image from the request list when a determination result corresponding to the transmitted image is received.

30. The method of claim 24, wherein the first schedule information includes a first period and a second period following the first period,
the first period defines a first interval and a repetition count of the first interval for recognizing the cooking state of the food material, and
the second period defines a second interval shorter than the first interval to recognize the cooking state of the food material.
